# EUROPÄISCHE PATENTSCHRIFT

(11) **EP 2 232 782 B1**
(45) Veröffentlichungstag und Bekanntmachung des Hinweises auf die Patenterteilung: **29.06.2011**
(21) Anmeldenummer: 08708138.6
(22) Anmeldetag: 24.01.2008
(51) Int. Cl.: H04L 12/40, H04L 12/28, H04L 29/08, G05B 19/02

(54) **VERFAHREN ZUR KONFIGURATION VON ADRESSEN IN EINEM KOMMUNIKATIONSNETZWERK**
METHOD FOR THE CONFIGURATION OF ADDRESSES IN A COMMUNICATION NETWORK
PROCÉDÉ POUR LA CONFIGURATION D'ADRESSES DANS UN RÉSEAU DE COMMUNICATION

(43) Veröffentlichungstag der Anmeldung: 29.09.2010
(73) Patentinhaber: Siemens Aktiengesellschaft, 80333 München (DE)
(72) Erfinder: SEILER, Andreas, A-1220 Wien (AT)
(74) Vertreter: Maier, Daniel Oliver
(86) Internationale Anmeldenummer: PCT/EP2008/050799
(87) Internationale Veröffentlichungsnummer: WO 2009/092445

(56) Entgegenhaltungen:
- EP-A- 1 182 528
- EP-A- 1 622 039
- EP-A- 1 798 936

## Beschreibung

### Technisches Gebiet

Die Erfindung betrifft ein Verfahren und ein System zum Steuern eines Kommunikationsnetzes mit einer Master-Kommunikationseinheit und mehreren Slave-Kommunikationseinheiten, wobei zumindest eine bestimmte Slave-Kommunikationseinheit vorhanden ist, die nicht bereits vorher mit der Master-Kommunikationseinheit kommuniziert hat.

### Stand der Technik

Es sind Kommunikationsnetze bekannt, bei denen die angeschlossenen Kommunikationseinheiten in einer sog. Master-Slave-Konfiguration betrieben werden. Eine Master-Einheit besitzt die Kontrolle über das Geschehen auf dem Übertragungsweg zu den angeschlossenen Slave-Einheiten. Sie steuert und überwacht den Datentransfer im Kommunikationsnetz, indem jede Datenübermittlung von ihr initiiert wird. Die Master-Slave-Konfiguration wird beispielsweise bei vermaschten Netzen eingesetzt, deren Übertragungswege starken Störungen ausgesetzt sind.

Beispielhaft sei hier das Power-Line-Carrier-Network oder Power-Line-Communication-Network (PLC-Network) genannt, bei dem die elektrischen Leitungen eines Energieverteilungsnetzes nicht nur zur Energieübertragung, sondern auch zur Übertragung von Daten genutzt werden. In einem PLC-Network kann eine Master-Kommunikationseinheit beispielsweise ein Datenkonzentrator sein, der örtlich entfernte Energiezähler (Slave-Einheiten) durch Fernabfrage automatisch ausliest (Automatisiertes Verbrauchsdaten- und Informationssystem).

Ein Energieverteilungsnetz ist ein offenes System, da es bezüglich der Ausbaustufe nicht begrenzt ist. Es ist so beschaffen, dass jederzeit neue Teilnehmeranschlüsse und damit Slave-Einheiten, im Folgenden auch kurz als Stationen bezeichnet, hinzu kommen können. Bevor aber eine Master-Einheit mit einer neu hinzugekommenen Station in Kontakt treten kann, muss sie Kenntnis über deren Existenz haben. Nur so ist eine Adressierung möglich.

Bislang wurde dieses Problem so gelöst, dass die Master-Einheit von einer im Netz hierarchisch übergeordneten zentralen Einheit entsprechend parametriert wurde. Diese zentrale Administration der Slave-Einheiten, die in der Regel auch manuelle Handlungen beinhaltet, ist aufwändig.

Aus der Sicht eines Betreibers des Energieverteilungsnetzes bzw. des Kommunikationsnetzes besteht daher ein Bedürfnis, neu hinzugekommene Kommunikationseinheiten mit möglichst geringem Aufwand und ohne manuelle Tätigkeit in das Kommunikationsnetz zu integrieren.

Aus EP-A-1 798 936 ist ein Verfahren zum Betreiben eines Bussystems (Kommunikationsnetzes) bekannt, wobei ein System aus Master- und Slaveeinheiten zunächst manuell konfiguriert werden. Anschließend gelingt es diesen Master- und Slaveeinheiten Kommunikationsverbindungen untereinander aufzubauen, eine automatische Konfiguration der Slaveeinheiten ist jedoch nicht vorgesehen.

Ein weiteres Beispiel eines Verfahrens zur Konfiguration von Bussystemen ist in EP-A-1 182 528 offenbart. Gemäß dieser Schrift ist eine zentrale Kontrolleinheit vorgesehen, welche die Adressen der Slaveeinheiten an die Mastereinheit vorgibt. Eine automatische Konfiguration ist allerdings ebenfalls nicht vorgesehen.

### Darstellung der Erfindung

Es ist ein Ziel der vorliegenden Erfindung, ein Verfahren und ein System zum Steuern eines Kommunikationsnetzes so anzugeben, dass die Integration neu hinzugekommener Slave-Kommunikationseinheiten einfach und automatisch möglich ist.

Diese Aufgabe wird bezüglich eines Verfahrens mit den Merkmalen des Patentanspruchs 1, bezüglich eines Systems mit den Merkmalen des Patentanspruchs 15 gelöst. Vorteilhafte Ausgestaltungen der Erfindung sind in den jeweiligen Unteransprüchen definiert.

In einem Grundgedanken geht die Erfindung davon aus, das Kommunikationsnetz so zu steuern, dass, ausgelöst durch ein Rundsende-Verfahren (Broardcasting), zunächst eine Phase der Kontaktaufnahme angestoßen wird, deren Ziel es ist, dass sich neu in das Netz aufzunehmende Kommunikationseinheiten melden, so dass deren Identität feststellbar ist und eine Zuordnung einer Adresse möglich ist. Im Ergebnis kann dann die neue Slave-Kommunikationseinheit in üblicher Weise von der Master-Kommunikationseinheit durch Adressierung angesprochen werden. Das erfindungsgemäße Verfahren geht also zunächst davon aus, dass im Netz zumindest eine Slave-Kommunikationseinheit vorhanden ist, die nicht bereits vorher mit der Master-Kommunikationseinheit kommuniziert hat, d.h. sich in einem noch nicht angemeldeten Status befindet, und die eine Einrichtung aufweist, die zum Zwecke des Herstellens einer Kommunikationsbeziehung durch ein Rundsende-Verfahren, das die Master-Kommunikationseinheit initiiert, zumindest einmalig aktiviert werden kann. Im Aktivierungsfall ermittelt sie aus einem vorgegebenen endlichen Wertebereich eine Sequenz diskreter Zufallsgrößen und vergleicht diese jeweils mit einer von der Master-Kommunikationseinheit vergebenen Auswahlgröße. Bei Übereinstimmung der jeweiligen Werte sendet die Einheit eine an die Master-Kommunikationseinheit gerichtete Antwortnachricht, in welcher eine Identifizierungs-Information der zumindest einen Slave-Kommunikationseinheit enthalten ist. Sobald die Master-Kommunikationseinheit Kenntnis über die Identität einer neu aufzunehmenden Slave-Kommunikationseinheit hat, kann sie dieser eine Adresse zuordnen und zukünftig wie die im Netz bereits angemeldeten Stationen ansprechen, d.h. es ist eine Kommunikationsbeziehung zwischen den Kommunikationspartnern herstellbar. Sowohl Master-Kommunikationseinheit als auch Slave-Kommunikationseinheit können als Quelle oder Senke innerhalb dieser bidirektionalen Kommunikation fungieren. Durch das erfindungsgemäße Steuerverfahren können neu hinzugekommene Stationen, die zuvor noch nicht mit der Master-Einheit Kontakt hatten, auf einfache Weise automatisch identifiziert werden. Die Suchen nach neuen Stationen erfolgt selbsttätig. Die Anmeldung und Integration von neuen Geräteeinheiten ist damit auf einfache Weise und ohne manuelle Handlung möglich.

Unter einer diskreten Zufallsgröße ist eine reelle Variable zu verstehen, die in Abhängigkeit vom Zufall bzw. Pseudozufall verschiedene, aber nur endlich viele Werte annehmen kann.

Unter einer Auswahlgröße ist ein Wert zu verstehen, der aus dem Wertebereich dieser Zufallsgröße entnommen ist.

Indem die Master-Kommunikationseinheit den Wertebereich bei der Ermittlung der Zufallsgröße vorgeben kann, ist es möglich, die Integrationsgeschwindigkeit zu beeinflussen. Dies ermöglicht eine Adaption an reale Verhältnisse. Vorteilhaft ist diese Adaption insbesondere in einem PLC-Netzwerk, beispielsweise in einem Niederspannungsnetz, bei dem grundsätzlich mit einer hohen Anzahl potenziell hinzukommender Teilnehmeranschlüsse (mit zugeordneten Energiezählern) gerechnet werden muss, wobei der Zuwachs aber geographisch bzw. zeitlich gesehen keine feste Größe ist, sondern Schwankungen unterworfen ist.

Eine bevorzugte Ausführung der Erfindung kann dadurch gekennzeichnet sein, dass das Rundsende-Verfahren folgende Schritte umfasst:
- Senden eines Rundsende-Anmeldetelegramms erster Art durch die Master-Kommunikationseinheit, wodurch in der Einrichtung die Ermittlung der diskreten Zufallsgröße bewirkt wird, wobei der Wertebereich entweder durch einen Nachrichteninhalt des Rundsende-Anmeldetelegramms erster Art, oder durch einen Speicherinhalt einer in der Einrichtung vorgesehenen Speichereinheit vorgegeben wird;
- Senden eines Rundsende-Anmeldetelegramms zweiter Art durch die Master-Kommunikationseinheit, wodurch ein Wert der Auswahlgröße, der aus dem Wertebereich entnommen ist, an die Einrichtung übermittelt wird.

Es kann zweckmäßig sein, wenn das Rundsende-Anmeldetelegramm erster Art zeitlich vor dem Rundsende-Anmeldetelegramm zweiter Art gesendet wird. Dadurch verringert sich in der Einrichtung der Aufwand für das Zwischenspeichern von Werten.

Es kann vorteilhaft sein, wenn die Master-Kommunikationseinheit die Identifizierungs-Information dazu verwendet, um der zumindest einen Slave-Kommunikationseinheit eine Adresse zuzuordnen.

Ein vorteilhafter Ablauf kann dadurch gekennzeichnet sein, dass die Master-Kommunikationseinheit nach Zuordnung einer Adresse, oder im Falle, dass sie innerhalb einer vorgegebenen Zeitspanne keine Antwortnachricht empfangen hat, einen anderen Wert aus dem Wertebereich entnimmt und diesen beim Senden des Rundsende-Anmeldetelegramms zweiter Art verwendet.

Programmtechnisch kann es günstig sein, wenn die Master-Kommunikationseinheit den anderen Wert durch Inkrementieren nach Art einer Laufvariablen bildet.

Es kann günstig sein, jeden Wert nur einmal zu verwenden, d.h. die Master-Kommunikationseinheit prüft vor Entnahme eines Wertes, ob der Wertebereich ausgeschöpft ist.

Für den Fall, dass die Master-Kommunikationseinheit feststellt, dass der Wertebereich ausgeschöpft ist, kann es vorteilhaft sein, den Anmeldevorgang neu zu starten und/oder optional einen neuen endlichen Wertebereich vorzusehen, so dass der Anmeldevorgang quasi fortwährend abläuft.

Es kann vorteilhaft sein, wenn die Master-Kommunikationseinheit bei der Vorgabe eines Wertebereichs eine bekannte oder erwartete Anzahl von noch nicht angemeldeten Slave-Kommunikationseinheiten berücksichtigt. Dadurch kann die Auffindungsgeschwindigkeit, mit der eine hinzugekommene Station aufgefunden wird, an den Anwendungsfall angepasst werden. Günstig ist dies insbesondere für ein PLC-Netzwerk, bei dem der Zuwachs von Teilnehmeranschlüssen zwar keine feste Größe, aber dennoch abschätzbar ist.

Ein vorteilhafter Ablauf kann dadurch gekennzeichnet sein, dass das Rundsende-Verfahren als Zeitmultiplex-Verfahren läuft. Dadurch wird die Phase des Kennenlernens bzw. Auffindens einer neuen Station in Zeitschlitze untergliedert, in denen jeweils nur ein festgelegter Anteil des Ablaufs transportiert wird. Dies macht den Ablauf unterbrechbar. Der Anmeldevorgang kann hierarchisch höheren Prozessen untergeordnet werden. Man kann sagen, dass der Anmeldevorgang quasi im Hintergrund aller übrigen Kommunikationsaufgaben abläuft, ohne dass die Interaktion im Kommunikationsnetz durch die Suche nach neuen Stationen beeinträchtigt wird. Der Vorteil des Zeitmultiplex-Verfahrens kann insbesondere dann ausschlaggebend sein, wenn die Bandbreite des Übertragungskanals gering ist. Dies ist bei einer Datenübertragung auf Leitungen eines Energieverteilungsnetzes der Fall.

Wenn die Vorgabe des Wertebereichs für die Ermittlung der Zufallszahl durch eine in der Einrichtung vorgesehene Speichereinheit erfolgt, kann es günstig sein, wenn als Speichereinheit der Typ eines nicht flüchtigen Speichers verwendet wird. Dies kann beispielsweise ein EEPROM-Baustein sein, der aus der Ferne parametriert wird. Als Speicherbaustein kann aber auch ein EPROM, ein ROM, ein (DIP)Schalter oder ein anderer fix programmierter Codeschalter dienen.

Hinsichtlich der Realisierung kann es günstig sein, wenn das Rundsende-Verfahren Signale verwendet, die die Form eines modulierten Trägersignals aufweisen.

Eine einfache und kostengünstige Realisierung kann dadurch gekennzeichnet sein, dass von der Einrichtung zum Erzeugen einer Zufallsgröße ein Pseudozufallsgenerator verwendet wird. Praktisch jede Programmiersprache verfügt über Routinen zum Erzeugen einer Zufallszahl. Ferner sind entsprechende Hardware-Bausteine kommerziell erhältlich. Moderne Mikroprozessoren stellen verschiedene Quellen für zufällige bzw. pseudozufällige Zahlen zur Verfügung, beispielsweise Register, welche Takt- bzw. Zyklusinformationen beinhalten.

Das erfindungsgemäße System zum Steuern eines Kommunikationsnetzes umfasst eine Master-Kommunikationseinheit und mehrere Slave-Kommunikationseinheiten, wobei zumindest eine bestimmte Slave-Kommunikationseinheit vorhanden ist, die nicht bereits vorher mit der Master-Kommunikationseinheit kommuniziert hat und mit einer Einrichtung so ausgestattet ist, dass nach Aktivierung durch eine zum Zwecke des Herstellens einer Kommunikationsbeziehung von der Master-Kommunikationseinheit initiierten Rundsendung zumindest einmalig aus einem vorgegebenen endlichen Wertebereich eine Folge von Werten einer diskreten Zufallsgröße ermittelt und diese jeweils mit einem von der Master-Kommunikationseinheit vorgegebenen Wert einer Auswahlgröße verglichen werden und im Falle einer Übereinstimmung eine an die Master-Kommunikationseinheit gerichtete Antwortnachricht, in welcher eine Identifizierungs-Information der zumindest einen Slave-Kommunikationseinheit enthalten ist, gesendet wird.

### Kurzbeschreibung der Zeichnungen

Zur weiteren Erläuterung der Erfindung wird im nachfolgenden Teil der Beschreibung auf die Zeichnungen Bezug genommen aus denen weitere vorteilhafte Ausgestaltungen Einzelheiten und Weiterbildungen der Erfindung zu entnehmen sind. Es zeigen:
- Figur 1: eine Netztopologie eines vermaschten Kommunikationsnetzes, das eine Master- Kommunikationseinheit und mehrere Slave- Kommunikationseinheiten zeigt;
- Figur 2: ein vereinfachtes Flussdiagramm des erfindungsgemäßen Verfahrens;
- Figur 3: eine vereinfachte Darstellung des Aufbaus eines Rundsende-Anmeldetelegramms erster Art;
- Figur 4: eine vereinfachte Darstellung des Aufbaus eines Rundsende-Anmeldetelegramms zweiter Art.

### Ausführung der Erfindung

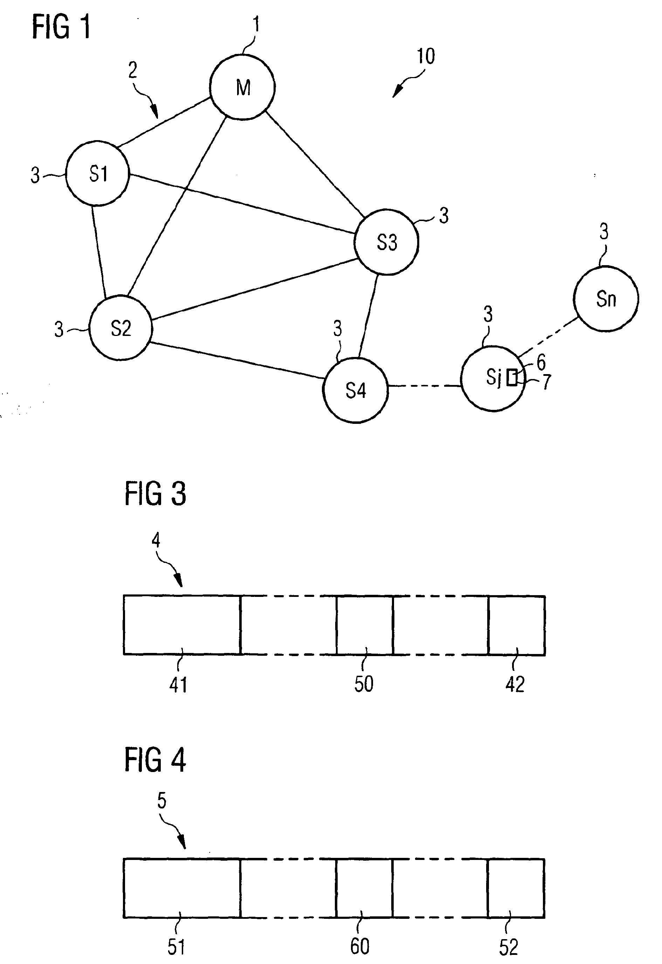

In der Figur 1 ist ein vermaschtes Kommunikationsnetzwerk gezeigt, bei dem die angeschlossenen Einheiten in einer Master-Slave-Konfiguration angeordnet sind. Das Bezugszeichen 10 kennzeichnet dieses Kommunikationsnetzwerk, das im Folgenden auch als Kommunikationsnetz oder kurz als Netz bezeichnet wird. Es besteht im Wesentlichen aus einer Master-Kommunikationseinheit 1 (M), einem Übertragungs- oder Kommunikationsmedium 2, und einer Mehrzahl von Slave-Kommunikationseinheiten 3 (S1, S2, S3, S4, ...,Sj, ... Sn). Die Slave-Kommunikationseinheiten 3 sind der Master-Kommunikationseinheit 1 zugeordnet und hierarchisch unterstellt.

Das in Figur 1 skizzierte Kommunikationsnetz 10 zeichnet sich dadurch aus, dass Signale einer sendenden Einheit von allen angeschlossenen Empfängern unmittelbar, jedoch um die Signallaufzeit verzögert, empfangen werden. Die Kommunikationsteilnehmer 1, 3 verwenden das Übertragungsmedium 2 gemeinsam. Wird beispielsweise von der Master-Kommunikationseinheit 1 ein Rundsende-Verfahren (Broardcasting) gesendet, so bedeutet dies, dass grundsätzlich sämtliche angeschlossenen Slave-Kommunikationseinheiten 3 diese Rundsendesignale empfangen können. Jeder dieser Empfänger stellt dann anhand bestimmter Kriterien fest, ob er die übermittelte Nachricht aufnimmt oder nicht. Sinngemäß gilt dies auch für den Sendevorgang einer Slave-Kommunikationseinheit 3. Die Master-Kommunikationseinheit 1 steuert und überwacht das Geschehen auf dem Übertragungsmedium 2.

Eine solche Netztopologie besitzt beispielsweise ein Power-Line-Carrier-(PLC)-Netzwerk. In den folgenden Ausführungen wird die Erfindung an Hand dieses PLC-Netzwerktyps näher erläutert. Es versteht sich aber, dass die Erfindung keineswegs auf Power-Line-Carrier (PLC) beschränkt ist, sondern in entsprechender Form auch in anderen Kommunikationsnetzen Anwendung finden kann, bei denen beispielsweise die Informationsübermittlung nicht über Energieverteilungsleitungen, sondern auf einem anderen Übertragungsmedium, beispielsweise drahtlos durch Funksignale erfolgen kann.

Im hier beschriebenen Ausführungsbeispiel eines PLC-Netzes können unter Slave-Kommunikationseinheiten 3 irgendwelche Endgeräte, beispielsweise Energiezähler, Lastschaltgeräte oder andere Geräte verstanden werden, die innerhalb eines PLC-Netzes z.B. mit einer in der Nähe eines Ortstransformators zentral angeordneten Master-Kommunikationseinheit 1, beispielsweise einem Datenkonzentrator kommunizieren.

Eine mögliche Aufgabe in einem solchen PLC-Netzwerk kann beispielsweise darin gesehen werden, die Zählerstände von Kundenanschlüssen über Fernabfrage automatisch abzufragen. Die Fernabfrage setzt voraus, dass diese Zählerstationen von der Administration des Netzes erfasst sind. Die Anzahl n der Stationen ist aber keine feste Größe im Netz 10.

Wenn nun in einem solchen PLC-Netzwerk 10 neue Slave-Kommunikationseinheiten z.B. Zähler 3 hinzu kommen, können diese vorerst nicht vom Datenkonzentrator 1 angesprochen werden, da dieser von deren Existenz nichts weiß. Bisher wurde dieses Problem dadurch gelöst, dass der Master-Kommunikationseinheit 1 von einer übergeordneten Ebene (in den Figuren zeichnerisch nicht dargestellt) des Energieverteilungsnetzes bzw. Kommunikationsnetzes mitgeteilt werden musste, welche und wie viele Stationen sich in dem von ihm gesteuerten Kommunikationsnetz befinden sollten. Dieses Vorgehen ist administrativ aufwendig.

Erfindungsgemäß wird das Kommunikationsnetz 10 nun so gesteuert, dass zwischen der Master-Kommunikationseinheit 1 und einer oder mehreren zu integrierenden neuen Slave-Kommunikationseinheiten 3 zunächst eine Kontaktanbahnung stattfindet, die das Ziel hat, dass sich eine noch nicht angemeldete Station 3 (Slave-Kommunikationseinheit) angesprochen fühlt und eine Identifizierungsinformation zur Master-Kommunikationseinheit 1 sendet. Zu diesem Zweck ist in der Slave-Kommunikationseinheit 3 eine Einrichtung 6 vorgesehen (in Figur 1 beispielhaft und stellvertretend Sj für die zu integrierende(n) Station(en)), die durch eine Rundsendung (Broardcasting) zum Zwecke des Herstellens einer Kommunikationsbeziehung zumindest einmalig (re)aktivierbar ist. Die Master-Kommunikationseinheit 1 initiierte diese Rundsendung. Nach erfolgter Anmeldung im Netz ist die Einrichtung 6 inaktiv.

In einem ersten Verfahrensschritt sendet die Master-Kommunikationseinheit ein Rundsende-Anmeldetelegramm erster Art aus. Dieses Rundsende-Anmeldetelegramm erster Art ist eine Broadcast-Nachricht, von der angenommen sei, dass sie eine oder mehrere bestimmte Slave-Kommunikationseinheiten 3, (darunter sind neue, dem Kommunikationsnetz 10 hinzuzufügende Slave-Kommunikationseinheiten Sj zu verstehen), erreicht und von dieser bzw. diesen empfangen wird. Diese bestimmten Slave-Kommunikationseinheiten 3, im Folgenden auch als Anmeldekandidaten bezeichnet, befinden sich in einem Betriebsmodus, in welchem sie noch nicht bei der Master-Kommunikationseinheit 1 angemeldet sind. In diesem Betriebsmodus ist jede dieser Slave-Kommunikationseinheiten 3 so beschaffen, dass der Empfang des Rundsende-Anmeldetelegramms erster Art bewirkt, dass die Einrichtung zum Erzeugen einer Abfolge von Werten einer Zufallsgröße (Zufallszahlen) angeregt wird. In der vorliegenden Erfindung ist die Zufallsgröße diskret, das heißt ihr Werteraum oder Wertebereich besteht aus endlich vielen Werten. Im vorliegenden Ausführungsbeispiel erzeugt ein Pseudozufallsgenerator die Zufallszahlen. Die Größe des Zahlenraums dieser Zufallszahlen wird im hier erläuterten Verfahrensablauf seitens der Master-Kommunikationseinheit vorgegeben und als Nachrichteninhalt mit dem Rundsende-Anmeldetelegramm erster Art an die Einrichtung übermittelt. Es ist aber auch denkbar, dass die Größe des Zahlenraums d.h. der Wertebereich durch einen Speicherbaustein in der Einrichtung vorgegeben wird, wobei der Speicherinhalt der Master-Kommunikationseinheit bekannt ist. Wie im Weiteren noch erläutert werden wird, ist die Geschwindigkeit für den Anmeldevorgang von der Größe des Zahlenraums abhängig, mit anderen Worten durch Vorgabe des Wertebereichs ist eine Adaption an reale Verhältnisse einer Anwendung möglich.

Zeitlich nach diesem ersten Verfahrensschritt sendet die Master-Kommunikationseinheit ein Rundsende-Anmeldetelegramm zweiter Art aus. Dieses zweite Rundsende-Anmeldetelegramm ist ebenfalls eine Broadcast-Nachricht, d.h. sie richtet sich ebenfalls an alle angeschlossenen Stationen. Es sei wieder angenommen, dass die Signale dieser Broadcast-Nachricht von allen Anmeldekandidaten empfangen werden können. Das Rundsende-Anmeldetelegramm zweiter Art enthält eine sendeseitig von der Master-Kommunikationseinheit ausgewählte Auswahlgröße; im vorliegenden Beispiel eine Auswahlzahl, die dem oben erwähnten Zahlenraum der Zufallszahl entnommen ist. Der Empfang des Rundsende-Anmeldetelegramm zweiter Art bewirkt, dass in jenen Slave-Kommunikationseinheiten, die noch nicht angemeldet sind, und in denen die oben genannte, durch Zufall gebildete Zahl bereitgehalten wird, die Einrichtung jeweils einen Vergleich mit der übermittelten Auswahlzahl durchführt. Das Vergleichsergebnis gibt den weiteren Ablauf vor:
a) Wenn dieser Vergleich zum Ergebnis führt, dass die beiden Werte gleich groß sind (Zufallszahl = Auswahlzahl), so führt dies dazu, dass diese Slave-Kommunikationseinheit eine an die Master-Kommunikationseinheit gerichtete Antwortnachricht sendet, in welcher die Identifizierungs-Information enthalten ist. Diese Identifizierungs-Information kann beispielsweise eine Geräte-Identifikation (z.B. eine Seriennummer einer Station, eines Energiezählers) sein. Nach Empfang dieser Identifizierungs-Information hat die Master-Kommunikationseinheit Kenntnis über die Identität des Anmeldekandidaten. Nach einer Adresszuordnung kann sie die neue Station (wie die übrigen bereits in Betrieb befindlichen Stationen) im Netz ansprechen. Die neue Station gilt ihm Kommunikationsnetz nun als angemeldet.
   Mit dem Senden der Antwortnachricht geht in der Slave-Kommunikationseinheit eine Änderung des Betriebsmodus einher; sie sieht sich nicht mehr als Anmeldekandidat, sondern als im Kommunikationsnetz bereits angemeldet und die Einrichtung ignoriert eventuell neu empfangene Rundsende-Anmeldetelegramme.
   Das Senden einer Antwortnachricht kann durch gezielte Adressierung der Master-Kommunikationseinheit erfolgen, da deren Adresse im Rundsende-Anmeldetelegramm erster bzw. zweiter Art enthalten ist. Das Senden der Antwortnachricht kann aber auch durch Broardcasting erfolgen.
b) Es kann nun aber auch der Fall eintreten, dass die Übereinstimmung zwischen der erzeugten Zufallszahl und der übermittelten Auswahlzahl nicht nur in einer, sondern in mehreren Slave-Kommunikationseinheiten festgestellt wird. In diesem Fall sendet jede dieser angesprochenen Slave-Kommunikationseinheiten eine Antwortnachricht bzw. ein Antworttelegramm aus. Das gleichzeitige Senden des Antworttelegramms führt zu einer Kollision auf dem Übertragungskanal und kann zu einer "Verstümmelung" des Antworttelegramms führen. Ist in der Master-Kommunikationseinheit das rückübermittelte Antworttelegramm nicht lesbar, so verwirft die Master-Kommunikationseinheit diese Antwortnachricht. Sie inkrementiert in einem weiteren Verfahrensschritt den Wert der Auswahlzahl.
   Es erfolgt nun eine Abfrage: Liegt der inkrementierte Wert der Auswahlzahl innerhalb des vorgegebenen, endlichen Zahlenbereichs, so wird mittels des Rundsende-Anmeldetelegramms zweiter Art dieser Wert an die Slave-Kommunikationseinheiten herangetragen. Der oben dargestellte Vergleichsprozess wird also erneut angestoßen.
   Ist hingegen der inkrementierte Wert der Auswahlzahl größer als die größte Zahl im Zahlenbereich, so wird seitens der Master-Kommunikationseinheit ein neuer Wertebereich für die Ermittlung einer Zufallszahl vergeben. Mit diesem wird das Rundsende-Anmeldetelegramm erster Art erneut ausgesendet, was bedeutet, dass die Einrichtungen der Anmeldekandidaten auf dieser Grundlage erneut zum Erzeugen von Zufallszahlen aufgefordert werden.
c) Es kann auch der Fall eintreten, dass die Master-Kommunikationseinheit keine auswertbare Antwortnachricht empfängt. Dies kann zum einen darin begründet sein, dass der Übertragungskanal gestört ist. Es kann aber auch sein, dass in keiner der Slave-Kommunikationseinheiten eine Übereinstimmung zwischen der generierten Zufallszahl und der übertragenen Auswahlzahl festgestellt wurde. In diesem Fall fühlt sich keine Slave-Kommunikationseinheit angesprochen. Damit wird auch von keiner Slave-Kommunikationseinheit eine Antwortnachricht gesendet. Die Master-Kommunikationseinheit erkennt, dass keine neue Slave-Kommunikationseinheit identifiziert werden konnte und inkrementiert den Wert der Auswahlzahl. Abhängig von der oben beschriebenen Abfrage beginnt die Prozedur neu.

Wie bereits dargestellt, entnimmt die Master-Kommunikationseinheit die Auswahlzahl aus dem Werteraum aus dem die Zufallsgröße ermittelt wird. Diese Entnahme kann dabei auf unterschiedliche Weise erfolgen, beispielsweise wahlfrei. Im vorliegenden Beispiel ist die Auswahlzahl eine Laufvariable, die nach jeder Adresszuordnung, bzw. immer dann, wenn die Master-Kommunikationseinheit keine plausible Antwortnachricht empfangen kann, um den Wert 1 erhöht wird. Die Auswahlzahl ist (wie die durch Zufall ermittelte Zahl) stets eine diskrete Größe. Beide werden nur temporär während der Ausführung der Anmeldeprozedur verwendet. Sobald die Anmeldeprozedur abgeschlossen ist wird die neu installierte Station durch eine Adresse angesprochen. Sie steht nun in einer Kommunikationsbeziehung mit der Master-Kommunikationseinheit und sieht sich nicht mehr als Anmeldekandidat.

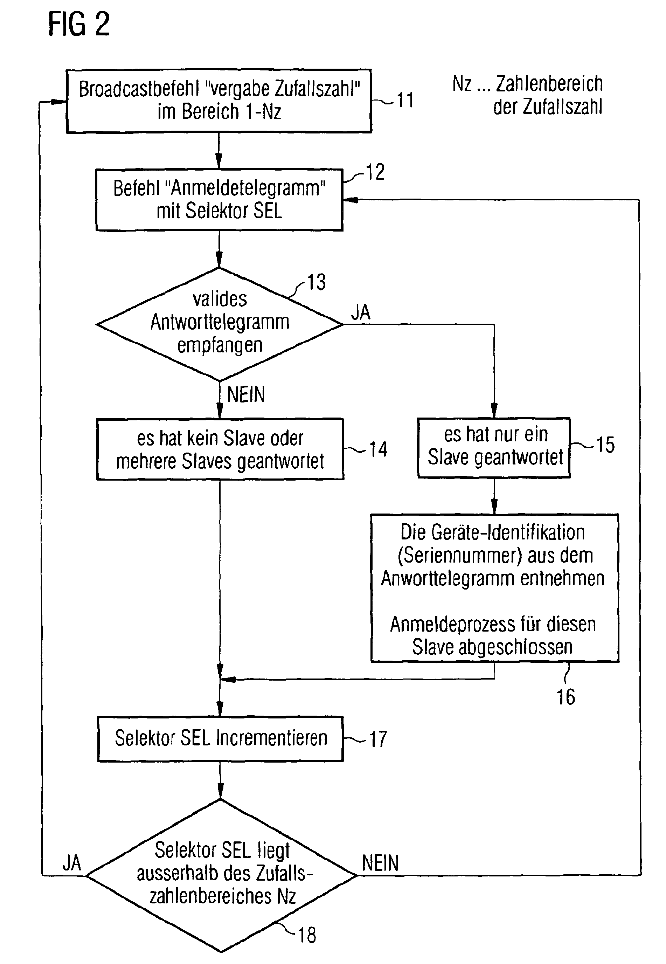

In Figur 2 ist in einem vereinfachten Flussdiagramm dieser Ablauf skizziert.

Der Ablauf beginnt mit dem Feld 11: Rundsende-Anmeldetelegramm erster Art mit dem Broadcast-Befehl "Vergabe Zufallszahl" im Bereich 1-Nz (Nz bezeichnet in Figur 2 den Zahlenraum bzw. Zahlenbereich der,Zufallszahl).

Im Feld 12 erfolgt das Senden des Rundsende-Anmeldetelegramms zweiter Art, wobei die Auswahlzahl in Figur 2 mit "SEL" (Selektor) abgekürzt ist.

Im Feld 13 prüft die Master-Kommunikationseinheit 1 ob eine gültige Antwortnachricht vorliegt. Liegt eine gültige Antwortnachricht vor (Feld 15), so wird von dieser Slave-Kommunikationseinheit die Geräte-Identifikation (Seriennummer) an die Master-Kommunikationseinheit rückübermittelt. Liegt diese Geräte-Identifikation bei der Master-Kommunikationseinheit vor, so vergibt die Master-Kommunikationseinheit in einer Handshake-Prozedur eine diesem Endgerät nunmehr zugeordnete Adresse, so dass der Anmeldeprozess für diese Slave-Kommunikationseinheit abgeschlossen ist (Feld 16). Ihre Einrichtung zum Erzeugen und Vergleichen einer Zufallszahl wird deaktiviert. Sie ist in weiterer Folge kein Anmeldekandidat mehr, sondern in die Gemeinschaft aktiver Stationen aufgenommen.

Im Feld 14 ist der Fall angegeben, dass in der Abfrage 13 herausgefunden wurde, dass keine gültige Antwortnachricht empfangen werden konnte. Wie bereits geschildert, kann dies mehrere Ursachen haben: die Übermittlung der Antwortnachricht ist unterbrochen; die Signale der Antwortnachricht sind auf Grund von Datenkollision gestört (z.B. wenn mehrere Slave-Kommunikationseinheiten antworten); oder es konnte in keiner Einrichtung eine Übereinstimmung festgestellt werden.

Nach Feld 14 bzw. Feld 16 kommt es zu einem Inkrementieren der Auswahlgröße (Feld 17; Selektor SEL in Figur 3) als Laufvariable der dargestellten Programmroutine.

Es folgt in Feld 18 eine Überprüfung dieser Laufvariablen: Liegt der inkrementierte Wert der Auswahlgröße (SEL) außerhalb des Zufallszahlenbereichs Nz, so erfolgt eine Rücksprung zu Feld 11 (Senden des Rundsende-Anmeldetelegramms erster Art); liegt der um eins erhöhte Wert der Auswahlgröße (SEL) innerhalb des Zufallszahlenbereichs Nz, so erfolgt ein Rücksprung zu Feld 12 (Senden des Rundsende-Anmeldetelegramms zweiter Art).

In der Figur 3 ist der Aufbau des Rundsende-Anmeldetelegramms erster Art 4 skizziert. Bezeichnet ist mit 41 das Kopfteil und mit 42 das Schlussteil. In einem Datenfeld 50 wird ein Datum, das den Wertebereich für das Erzeugen der Zufallsgröße abbildet übertragen. Jede noch nicht am Kommunikationsnetz angemeldete Slave-Kommunikationseinheit nimmt diese Information auf und startet das Erzeugen einer Zufallszahl. Die Information im Datenfeld 50 entspricht dem Wertebereich und wird von der Master-Kommunikationseinheit 1 vorgegeben. (Wie oben bereits erwähnt, ist dieses Datenfeld nicht zwingend erforderlich, d.h. der Wertebereich kann auch in einer Speichereinrichtung 7 einer anzumeldenden Slave-Kommunikationseinheit Sj gespeichert sein, sofern diese Information der Master-Kommunikationseinheit bekannt ist). In der Figur 4 ist vereinfacht der Aufbau des Rundsende-Anmeldetelegramms zweiter Art 5 skizziert. Es besteht ebenfalls aus einem Kopfteil 51 und einem Schlussteil 52. In einem Datenfeld 60 wird die Information der Auswahlgröße übertragen. Die Auswahlgröße entnimmt die Master-Kommunikationseinheit aus dem Wertebereich, der die Grundlage für das Erzeugen der diskreten Zufallszahl ist. Jede noch nicht am Kommunikationsnetz angemeldet Slave-Kommunikationseinheit nimmt diese Information aus dem Datenfeld 60 auf und vergleicht sie mit der zuvor dem Datenfeld 50 entnommenen Information.

Indem die Master-Kommunikationseinheit den Zahlenraum für das Erzeugen der Zufallszahl vorgibt bzw. im Fall der endgeräteseitigen Speicherung kennt, ist es möglich, die Wahrscheinlichkeit mit der eine Station im Netz identifiziert werden kann an reale Verhältnisse anzupassen. Wird beispielsweise der Werteraum groß vorgegebenen, so sinkt die Wahrscheinlichkeit, dass ein Anmeldekandidat innerhalb einer Zeitspanne aufgefunden werden kann.

Bei einem PLC-Netzwerk verwaltet eine Master-Kommunikationseinheit mehrere 1000 Teilnehmeranschlüsse. Je nach örtlicher Gegebenheit ist mit einer gewissen Zahl neu hinzukommender Stationen zu rechnen. Die Zahl ist abschätzbar.

Die oben beschriebene Anmeldeprozedur läuft bevorzugt im Zeitmultiplex-Verfahren im Hintergrund aller übrigen Kommunikationsaufgaben des Kommunikationsnetzes. Der Ablauf ist automatisch. Dies ist ein großer Vorteil der Erfindung, da keine manuellen Handlungen für die Anmeldung mehr erforderlich sind. Die Anmeldeprozedur ist so gestaltet, dass sie jederzeit von Prozessen mit höherer Priorität unterbrochen werden kann. Der Ablauf im Kommunikationsnetz ist durch die Stationssuche weitgehend unbeeinträchtigt.

Abschließend sei noch eine spezielle Variante der Erfindung kurz beschrieben:
Wie oben dargestellt, wird die Auswahlzahl dem Werteraum der Zufallsgröße entnommen, das heißt, jeder Wert kommt im Werteraum also nur einmal vor. Dies bedeutet, dass jeder Wert nur einmal entnommen (benutzt) werden kann, dies solange, bis die Master-Kommunikationseinheit einen neuen Werteraum vorgibt.

In einem speziellen Fall, in welchen mehrere Slave-Kommunikationseinheiten mehr oder weniger gleichzeitig mit einer Antwortnachricht antworten, ist es aber nun denkbar, von diesem Prinzip abzuweichen und eine Auswahlzahl zumindest zweimal zu verwenden: Nachdem die Master-Kommunikationseinheit der Station, die sich als erste gemeldet hat, eine Adresse zugeordnet hat, fühlt sich diese Station nicht mehr als Anmeldekandidat und ignoriert weitere Rundsendenachrichten. Die Stationssuche kann in diesem Fall beschleunigt werden, indem die gleiche Auswahlzahl erneut durch eine Broadcast-Nachricht gesendet wird, so dass eine Station, die zuvor bereits durch Zufall eine übereinstimmende Zufallszahl ermittelt hat, in einem unmittelbar darauf folgenden Verfahrensschritt angemeldet werden kann, ohne dass das Rundsende-Anmeldetelegramm erster Art (und damit die Ermittlung von neuen Zufallszahlen in allen noch nicht angemeldeten Slave-Kommunikationseinheiten gestartet wird) gesendet werden muss.

Verglichen mit einer sukzessiven Adressierung eines Adressraums, ist das erfindungsgemäße Verfahren mit der Kontaktanbahnung und der anschließenden Übermittlung einer Identifizierungs-Information weitaus schneller.

Die Realisierung des erfindungsgemäßen Verfahrens kann zumindest teilweise oder vollständig durch elektronische Bausteine, wie Mikroprozessoren mit entsprechender Peripherie und/oder fest verdrahteter Hardware oder als programmierbares logisches Feld, oder in Form einer integrierten Schaltung, die opto-elektronische Komponenten beinhaltet erfolgen.

### Zusammenstellung der Verwendeten Bezugszeichen

- 1: Master-Kommunikationseinheit (M)
- 2: Kommunikationsmedium
- 3: Slave-Kommunikationseinheit (S1, S2, S3,..., Sj,...Sn)
- 4: Rundsende-Anmeldetelegramm erster Art
- 5: Rundsende-Anmeldetelegramm zweiter Art
- 6: Einrichtung
- 7: Speichereinrichtung

- 10: Kommunikationsnetzwerk
- 11 bis 18: Felder im Ablaufdiagramm

- 41: Kopfteil im Rundsende-Anmeldetelegramm erster Art
- 42: Schlussteil im Rundsende-Anmeldetelegramm erster Art
- 50: Datenfeld im Rundsende-Anmeldetelegramm erster Art

- 51: Kopfteil im Rundsende-Anmeldetelegramm zweiter Art
- 52: Schlussteil im Rundsende-Anmeldetelegramm zweiter Art
- 60: Datenfeld im Rundsende-Anmeldetelegramm zweiter Art

## Patentansprüche

1. Verfahren zum Steuern eines Kommunikationsnetzes (10) mit einer Master-Kommunikationseinheit (M) und mehreren Slave-Kommunikationseinheiten (S1..Sn), wobei zumindest eine bestimmte Slave-Kommunikationseinheit (Sj) vorhanden ist, die nicht bereits vorher mit der Master-Kommunikationseinheit (M) kommuniziert hat und mit einer Einrichtung (6) zum Zwecke des Herstellens einer Kommunikationsbeziehung zu der Master-Kommunikationseinheit (M) vorgesehen ist,
**dadurch gekennzeichnet, dass**
bei einer von der Master-Kommunikationseinheit (M) initiierten Rundsendung zumindest einmalig aus einem vorgegebenen endlichen Wertebereich eine Folge von Werten einer diskreten Zufallsgröße ermittelt und diese jeweils mit einem von der Master-Kommunikationseinheit (M) vorgegebenen Wert einer Auswahlgröße verglichen werden und im Falle einer Übereinstimmung eine an die Master-Kommunikationseinheit (M) gerichtete Antwortnachricht, in welcher eine Identifizierungs-Information der zumindest einen Slave-Kommunikationseinheit (Sj) enthalten ist, gesendet wird.

2. Verfahren nach Anspruch 1, **dadurch gekennzeichnet, dass** die Rundsendung folgende Verfahrensschritte umfasst:
Senden eines Rundsende-Anmeldetelegramms erster Art (4) durch die Master-Kommunikationseinheit (M), wodurch in der Einrichtung (6) die Ermittlung der diskreten Zufallsgröße bewirkt wird, wobei der Wertebereich entweder durch einen Nachrichteninhalt des Rundsende-Anmeldetelegramms erster Art (4) oder durch einen Speicherinhalt einer in der Einrichtung vorgesehenen Speichereinheit (7) vorgegeben wird;
Senden eines Rundsende-Anmeldetelegramms zweiter Art (5) durch die Master-Kommunikationseinheit (M), wodurch ein Wert der Auswahlgröße, der aus dem Wertebereich entnommen ist, an die Einrichtung (6) übertragen wird.

3. Verfahren nach Anspruch 2, **dadurch gekennzeichnet, dass** das Rundsende-Anmeldetelegramm erster Art (4) zeitlich vor dem Rundsende-Anmeldetelegramm zweiter Art (5) gesendet wird.

4. Verfahren nach Anspruch 2 oder 3, **dadurch gekennzeichnet dass** die Master-Kommunikationseinheit (M) die Identifizierungs-Information dazu verwendet, um der zumindest einen Slave-Kommunikationseinheit (S1...Sn) eine Adresse zuzuordnen.

5. Verfahren nach Anspruch 4, **dadurch gekennzeichnet, dass** die Master-Kommunikationseinheit (M) nach Zuordnung einer Adresse, oder im Falle, dass die Master-Kommunikationseinheit (M) innerhalb einer vorgegebenen Zeitspanne nach dem Senden des Rundsende-Anmeldetelegramms zweiter Art (5) keine auswertbare Antwortnachricht empfangen hat, einen anderen Wert aus dem Wertebereich entnimmt und diesen beim Senden eines Rundsende-Anmeldetelegramms zweiter Art (5) verwendet.

6. Verfahren nach Anspruch 5, **dadurch gekennzeichnet, dass** die Master-Kommunikationseinheit (M) den anderen Wert durch Inkrementieren nach Art einer Laufvariablen bildet.

7. Verfahren nach Anspruch 6, **dadurch gekennzeichnet, dass** die Master-Kommunikationseinheit (M) vor Entnahme eines Wertes prüft, ob der endliche Wertebereich ausgeschöpft ist.

8. Verfahren nach Anspruch 7, **dadurch gekennzeichnet, dass** für den Fall, dass die Master-Kommunikationseinheit (M) feststellt, dass der Wertebereich ausgeschöpft ist, einen neuen endlichen Wertebereich vorgibt und beim Senden des Rundsende-Anmeldetelegramms erster Art (4) verwendet.

9. Verfahren nach Anspruch 8, **dadurch gekennzeichnet, dass** die Master-Kommunikationseinheit (M) bei der Vorgabe eines neuen Wertebereichs eine potentielle Anzahl von Slave-Kommunikationseinheiten (S1...Sn), zu denen noch keine Kommunikationsbeziehung besteht, durch Schätzung ermittelt.

10. Verfahren nach einem der Ansprüche 2 bis 9, **dadurch gekennzeichnet, dass** das Kommunikationsnetz (10) ein Power-Line-Carrier-(PLC)-Netzwerk ist und das Senden des Rundsende-Anmeldetelegramms erster (4) und zweiter Art (5) fortwährend durchgeführt wird.

11. Verfahren nach einem der Ansprüche 2 bis 10, **dadurch gekennzeichnet, dass** für die Speichereinheit (7) ein in der Einrichtung (6) vorgesehener nicht flüchtiger Speicher verwendet wird.

12. Verfahren nach einem der vorstehenden Ansprüche, **dadurch gekennzeichnet, dass** das Rundsende-Verfahren durch ein Zeitmultiplex-Verfahren durchgeführt wird.

13. Verfahren nach einem der vorstehenden Ansprüche, **dadurch gekennzeichnet, dass** das Rundsende-Verfahren Sendesignale verwendet, die die Form eines modulierten Trägersignals aufweisen.

14. Verfahren nach einem der vorstehenden Ansprüche, **dadurch gekennzeichnet dass** von der Einrichtung zum Erzeugen einer Zufallsgröße ein Pseudozufallsgenerator verwendet wird.

15. System zum Steuern eines Kommunikationsnetzes (10) mit einer Master-Kommunikationseinheit (M) und mehreren Slave-Kommunikationseinheiten (S1..Sn), wobei zumindest eine bestimmte Slave-Kommunikationseinheit (Sj) vorhanden ist, die nicht bereits vorher mit der Master-Kommunikationseinheit (M) kommuniziert hat und mit einer Einrichtung (6) zum Zwecke des Herstellens einer Kommunikationsbeziehung zu der Master-Kommunikationseinheit (M) vorgesehen ist,
**dadurch gekennzeichnet, dass**
bei einer von der Master-Kommunikationseinheit (M) initiierten Rundsendungzumindest einmalig aus einem vorgegebenen endlichen Wertebereich eine Folge von Werten einer diskreten Zufallsgröße ermittelt und diese jeweils mit einem von der Master-Kommunikationseinheit (M) vorgegebenen Wert einer Auswahlgröße verglichen werden und im Falle einer Übereinstimmung eine an die Master-Kommunikationseinheit (M) gerichtete Antwortnachricht, in welcher eine Identifizierungs-Information der zumindest einen Slave-Kommunikationseinheit (Sj) enthalten ist, gesendet wird.

## Claims

1. Method for controlling a communication network (10) with a master communication unit (M) and a number of slave communication units (S1..Sn), wherein at least one specific slave communication unit (Sj) is present which has not already communicated previously with the master communication unit (M) and a device (6) is provided for the purposes of establishing a communication link to the master communication unit (M),
**characterised in that**
in a broadcast initiated by the master communication unit (M) a sequence of values of a discrete random variable is determined at least once from a predetermined finite range of values and these are compared in each case with a predetermined value of a selection variable by the master communication unit (M) and, if the values match, a response message directed to the master communication unit (M) is sent, in which identification information of the at least one slave communication unit (Sj) is contained.

2. Method according to claim 1, **characterised in that** the broadcast comprises the following method steps:
Sending of a first type of broadcast notification telegram (4) by the master communication unit (M), by which the device (6) is made to determine the discrete random variable, wherein the range of values is determined either by a message content of the first type of broadcast notification telegram (4) or by content of a memory unit (7) provided in the device;
Sending of a second type of broadcast notification telegram (5) by the master communication unit (M), through which a value of the selection variable which is extracted from the range of values is transmitted to the device (6).

3. Method according to claim 2, **characterised in that** the first type of broadcast notification telegram (4) is sent chronologically before the second type of broadcast notification telegram (5).

4. Method according to claim 2 or 3, **characterised in that** the master communication unit (M) uses the identification information in order to assign an address to the at least one slave communication unit (S1...sn).

5. Method according to claim 4, **characterised in that** the master communication unit (M), after assigning an address, or in the event of the master communication unit (M) not having received a response message that it is able to evaluate within a predetermined time span after sending the second type of broadcast notification telegram (5), extracts another value from the range of values and uses this when sending the second type of broadcast notification telegram (5).

6. Method according to claim 5, **characterised in that** the master communication unit (M) forms the other value by incrementation in the manner of a runtime variable.

7. Method according to claim 6, **characterised in that** the master communication unit (M), before extracting a value, checks whether the finite range of values is exhausted.

8. Method according to claim 7, **characterised in that**, for the case in which the master communication unit (M) establishes that the range of values is exhausted, predefines a new finite range of values and uses it when sending the first type of broadcast notification telegram (4).

9. Method according to claim 8, **characterised in that** the master communication unit (M), in the predetermination of a new range of values, establishes by estimation a potential number of slave communication units (S1...Sn) to which no communication link yet exists.

10. Method according to one of claims 2 through 9, **characterised in that** the communication network (10) is a Power-Line-Carrier-(PLC) network and that the first type (4) and second type (5) of broadcast notification telegram are sent continuously.

11. Method according to one of claims 2 through 10, **characterised in that** non-volatile memory provided in the device (6) is used for the memory unit (7).

12. Method according to one of the preceding claims, **characterised in that** the broadcast method is executed by a time-division multiplexing method.

13. Method according to one of the preceding claims, **characterised in that** the broadcast method uses send signals having the form of a modulated carrier signal.

14. Method according to one of the preceding claims, **characterised in that** a pseudo random generator is used by the device to generate a random variable.

15. System for controlling a communication network (10) with a master communication unit (M) and a number of slave communication units (S1..Sn), with at least one specific slave communication unit (Sj) being present that has not already communicated previously with the master communication unit (M) and with a device (6) provided for the purposes of establishing a communication link to the master communication unit (M),
**characterised in that**
in a broadcast initiated by the master communication unit (M) a sequence of values of a discrete random variable is determined at least once from a predetermined finite range of values and these are compared in each case with a predetermined value of a selection variable by the master communication unit (M) and, if the values match, a response message directed to the master communication unit (M) is sent, in which identification information of the at least one slave communication unit (Sj) is contained.

## Revendications

1. Procédé de commande d'un réseau de communication (10) avec une unité de communication maître (M) et plusieurs unités de communication esclaves (S1 ... Sn), au moins une unité de communication esclave déterminée (Sj) étant présente, laquelle n'a pas encore préalablement communiqué avec l'unité de communication maître (M) et est prévue avec un dispositif (6) pour établir une relation de communication avec l'unité de communication maître (M), **caractérisé en ce que**, étant donné une diffusion initialisée par l'unité de communication maître (M), une suite de valeurs d'une grandeur aléatoire discrète est déterminée au moins une fois à partir d'une gamme de valeurs finie prédéterminée et celles-ci sont respectivement comparées avec une valeur d'une grandeur de sélection qui est spécifiée par l'unité de communication maître (M) et, en cas d'identité, un message de réponse adressé à l'unité de communication maître (M) et contenant une information d'identification de l'au moins une unité de communication esclave (Sj) est émis.

2. Procédé selon la revendication 1, **caractérisé en ce que** la diffusion comprend les étapes suivantes :
- émission d'un télégramme de connexion diffusé d'un premier type (4) par l'unité de communication maître (M), ce qui provoque la détermination de la grandeur aléatoire discrète dans le dispositif (6), la gamme de valeurs étant spécifiée soit par un contenu de message du télégramme de connexion diffusé d'un premier type (4) soit par un contenu de mémoire d'une unité de mémoire (7) prévue dans le dispositif ;
- émission d'un télégramme de connexion diffusé d'un deuxième type (5) par l'unité de communication maître (M) ce par quoi une valeur de la grandeur de sélection qui est prélevée dans de la gamme de valeurs est transmise au dispositif (6).

3. Procédé selon la revendication 2, **caractérisé en ce que** le télégramme de connexion diffusé d'un premier type (4) est émis temporellement avant le télégramme de connexion diffusé d'un deuxième type (5).

4. Procédé selon la revendication 2 ou 3, **caractérisé en ce que** l'unité de communication maître (M) utilise l'information d'identification pour associer une adresse à l'au moins une unité de communication esclave (S1 ... Sn).

5. Procédé selon la revendication 4, **caractérisé en ce que** l'unité de communication maître (M), après l'affectation d'une adresse ou dans le cas où l'unité de communication maître (M) n'a pas reçu de message de réponse évaluable dans un laps de temps prédéterminé après l'envoi du télégramme de connexion diffusé d'un deuxième type (5), prélève une autre valeur dans la gamme de valeurs et l'utilise lors de l'émission d'un télégramme de connexion diffusé d'un deuxième type (5).

6. Procédé selon la revendication 5, **caractérisé en ce que** l'unité de communication maître (M) forme l'autre valeur par incrémentation à l'instar d'une variable courante.

7. Procédé selon la revendication 6, **caractérisé en ce que** l'unité de communication maître (M) vérifie, avant le prélèvement d'une valeur, si la gamme de valeurs finie est épuisée.

8. Procédé selon la revendication 7, **caractérisé en ce que** l'unité de communication maître (M), si elle constate que la gamme de valeurs est épuisée, spécifie une nouvelle gamme de valeurs finie et l'utilise lors de l'émission du télégramme de connexion diffusé d'un premier type (4).

9. Procédé selon la revendication 8, **caractérisé en ce que** l'unité de communication maître (M), lors de la spécification d'une nouvelle gamme de valeurs, détermine par estimation un nombre potentiel d'unités de communication esclaves (S1 ... Sn) avec lesquelles il n'existe pas encore de relation de communication.

10. Procédé selon l'une des revendications 2 à 9, **caractérisé en ce que** le réseau de communication (10) est un réseau PLC (Power Line Carrier) et l'émission du télégramme de connexion diffusé d'un premier type (4) et d'un deuxième type (5) s'effectue en permanence.

11. Procédé selon l'une des revendications 2 à 10, **caractérisé en ce qu'**est utilisée, pour l'unité de mémoire (7), une mémoire non volatile prévue dans le dispositif (6).

12. Procédé selon l'une des revendications précédentes, **caractérisé en ce que** le procédé de diffusion est réalisé par un procédé de multiplexage dans le temps.

13. Procédé selon l'une des revendications précédentes, **caractérisé en ce que** le procédé de diffusion utilise des signaux d'émission qui présentent la forme d'un signal porteur modulé.

14. Procédé selon l'une des revendications précédentes, **caractérisé en ce que** le dispositif, pour générer une grandeur aléatoire, utilise un générateur pseudo-aléatoire.

15. Système pour commander un réseau de communication (10) avec une unité de communication maître (M) et plusieurs unités de communication esclaves (S1 ... Sn), au moins une unité de communication esclave déterminée (Sj) étant présente, laquelle n'a pas encore préalablement communiqué avec l'unité de communication maître (M) et est prévue avec un dispositif (6) pour établir une relation de communication avec l'unité de communication maître (M), **caractérisé en ce que**, étant donné une diffusion initialisée par l'unité de communication maître (M), une suite de valeurs d'une grandeur aléatoire discrète est déterminée au moins une fois à partir d'une gamme de valeurs finie prédéterminée et celles-ci sont respectivement comparées avec une valeur d'une grandeur de sélection qui est spécifiée par l'unité de communication maître (M) et, en cas d'identité, un message de réponse adressé à l'unité de communication maître (M) et contenant une information d'identification de l'au moins une unité de communication esclave (Sj) est émis.
